# EUROPÄISCHE PATENTSCHRIFT

(11) **EP 3 892 497 B1**
(45) Veröffentlichungstag und Bekanntmachung des Hinweises auf die Patenterteilung: **23.08.2023**
(21) Anmeldenummer: 21165988.3
(22) Anmeldetag: 30.03.2021
(51) Int. Cl.: B60Q 1/00, B60Q 1/46, F21S 41/24, F21S 43/14, F21S 43/145, F21S 43/237, F21S 43/239, F21S 43/245, F21S 41/63, F21W 103/55, F21W 102/19, F21W 102/13

(54) **LICHTMODUL**
LIGHT MODULE
MODULE D'ÉCLAIRAGE

(30) Priorität: 06.04.2020 DE 102020109561
(43) Veröffentlichungstag der Anmeldung: 13.10.2021
(73) Patentinhaber: Marelli Automotive Lighting Reutlingen (Germany) GmbH, 72762 Reutlingen (DE)
(72) Erfinder: Dr. Foster, Henry, 74395 Mundelsheim (DE)
(74) Vertreter: DREISS Patentanwälte PartG mbB

(56) Entgegenhaltungen:
- EP-A1- 2 597 357
- EP-A2- 2 703 218
- WO-A1-2015/107273
- CN-A- 107 499 225
- DE-A1-102004 002 280
- DE-A1-102005 032 128
- DE-A1-102016 124 111

## Beschreibung

Die Erfindung betrifft ein Lichtmodul.

Es sind Lichtmodule für Scheinwerfer bekannt, bei denen Teile von Lichtmodulen mechanisch zu verstellen.

Die EP 2 703 218 A2 offenbart einen Scheinwerfer für Kraftfahrzeuge sowie ein Verfahren zur Kontrollierung desselben. Der Scheinwerfer umfasst in einer Ausführungsform dabei ein erstes und zweites Lampenmodul, wobei das zweite Lampenmodul an der Frontseite des ersten Lampenmoduls angeordnet ist, und ein Modus des zweiten Lampenmoduls auf einen von einem ersten Modus, in dem ein Teil des zweiten Lampenmoduls mit dem ersten Lampenmodul auf einem Lichtverlaufsweg überlappt, und einem zweiten Modus, in dem das zweite Lampenmodul nicht mit dem ersten Lampenmodul überlappt, eingestellt ist.

Vergleichbares ist aus der DE 10 2016 124 111 A1 vorbekannt.

Ausgehend von diesem Stand der Technik, ist es die Aufgabe der Erfindung, ein Lichtmodul mit verstellbaren Elementen zu verbessern.

Ein erster Aspekt der Erfindung betrifft ein Lichtmodul gemäß Anspruch 1.

Da die Nebenlichteinheit die erste Hauptlichtverteilung abstrahlt, ist der Umstand, dass die Nebenlichteinheit die Hauptlichteinheit teilweise verdeckt weniger kritisch. Vielmehr verringern sich durch das Abstrahlen der ersten Hauptlichtverteilung von der Nebenlichteinheit die Anforderungen an den Antrieb. Der Antrieb muss somit weniger schnell die Nebenlichteinheit in Richtung der zweiten Position bewegen. Gleichzeitig wird die Aktivierung der Hauptlichtfunktion, welche hauptsächlich von der Hauptlichteinheit bereitgestellt wird, beschleunigt, indem, bereits bevor die Nebenlichteinheit die Hauptlichteinheit freigibt, die erste Hauptlichtverteilung abgestrahlt wird.

Das bereitgestellte Lichtmodul ist für die Realisierung der Funktion "Lichthupe", die durch ein kurzzeitiges Einschalten des Fernlichts mittels der Hauptlichteinheit aktiviert wird. Während des Wegdrehens oder Wegschiebens der Nebenlichteinheit wird sukzessive das Lichthupenlicht durch das eigentliche Fernlicht ersetzt. Dadurch wird ein sanfterer Wechsel auch hinsichtlich Lichtstärke ermöglicht, ohne die eigentliche Aufmerksamkeitswirkung zu reduzieren.

Vorteilhaft überbrückt die erste Hauptlichtverteilung die Zeitdauer der Bewegung der Nebenlichteinheit bis zur Freigabe der zweiten Hauptlichtverteilung.

Ein vorteilhaftes Beispiel zeichnet sich dadurch aus, dass das Lichtmodul eine Zusatzlichtquelle zum Abstrahlen einer ersten Lichtverteilung umfasst, und wobei die Nebenlichteinheit einen Lichtleiter, welcher einer Einkoppelfläche zur Einkopplung der ersten Lichtverteilung und die Abstrahlfläche umfasst, umfasst.

Ein vorteilhaftes Beispiel zeichnet sich dadurch aus, dass die Zusatzlichtquelle feststehend zu der Hauptlichteinheit angeordnet ist, und wobei die Zusatzlichtquelle und die Nebenlichteinheit in der ersten Position so zueinander angeordnet sind, dass die erste Lichtverteilung über die Einkoppelfläche in den Lichtleiter eingekoppelt wird.

Vorteilhaft kann hierdurch kurzzeitig die Verdeckung der Hauptlichteinheit überbrückt werden.

Ein vorteilhaftes Beispiel zeichnet sich dadurch aus, dass der Lichtleiter der Nebenlichteinheit eine Einkoppelfläche und die Abstrahlfläche umfasst, wobei die Einkoppelfläche in der ersten Position der Nebenlichtquelle wenigstens einen Teil der von der Abstrahlfläche der Hauptlichteinheit abgestrahlten zweiten Hauptlichtverteilung in den Lichtleiter einkoppelt, so dass die erste Hauptlichtverteilung von der Abstrahlfläche des Lichtleiters in Abhängigkeit von der zweiten

Hauptlichtverteilung abstrahlbar ist.

Vorteilhaft wird das eingekoppelte Licht beispielsweise um nicht transparente Abschnitte der Nebenlichteinheit herumgeleitet, um an der Abstrahlfläche ausgekoppelt zu werden. Auch ist sichergestellt, dass Lichtfarbe und spektrale Zusammensetzung exakt dem Licht der zweiten Hauptlichtverteilung entsprechen. Insbesondere können weitere Lichtquellen entfallen.

Ein zweiter Aspekt der Erfindung betrifft ein Lichtmodul gemäβ Anspruch 5.

Ein dritter, nicht erfindungsgemäßer Aspekt der Beschreibung betrifft ein Verfahren zum Betreiben eines Lichtmoduls für einen Kraftfahrzeugscheinwerfer, wobei das Verfahren umfasst: Einen ersten Schritt, in welchem ein Aktivierungssignals ermittelt oder empfangen wird und mittels einer Nebenlichteinheit eine Nebenlichtverteilung von einer Abstrahlfläche der Nebenlichteinheit abgestrahlt wird; einen zweiten Schritt, in welchem in Abhängigkeit von dem Aktivierungssignal, mittels der Nebenlichteinheit, eine erste Hauptlichtverteilung von der Abstrahlfläche der Nebenlichteinheit abgestrahlt wird; einen dritten Schritt, in welchem, mittels einer Antriebseinheit, die Nebenlichteinheit relativ zu einer Hauptlichteinheit ausgehend von einer ersten Position, in welcher die Nebenlichteinheit eine Abstrahlfläche der Hauptlichteinheit zumindest abschnittsweise überdeckt, in eine zweite Position, in welcher die Überdeckung der Abstrahlfläche der Hauptlichteinheit durch die Nebenlichteinheit reduziert ist, in Abhängigkeit von dem Aktivierungssignal bewegt wird; und einen vierten Schritt, in welchem mittels der Hauptlichteinheit eine zweite Hauptlichtverteilung von der Abstrahlfläche der Hauptlichteinheit abgestrahlt wird.

Ein vorteilhaftes Beispiel zeichnet sich dadurch aus, dass die Abstrahlung der ersten Hauptlichtverteilung und die Abstrahlung der zweiten Hauptlichtverteilung gemeinsam aktiviert werden.

Vorteilhaft wird dadurch ein sichtbarer Einschaltversatz minimiert.

In der Zeichnung zeigen:
- Figur 1: einen Kraftfahrzeugscheinwerfer mit einem Lichtmodul in schematischer Form;
- Figuren 2 und 6: jeweils ein schematisches Ablaufdiagramm;
- Figuren 3a, 3b: ein Beispiel des Lichtmoduls in schematischer Form;
- Figur 4: ein weiteres Beispiel des Lichtmoduls in schematischer Form; und
- Figuren 5a bis 5c: ein zusätzliches Beispiel des Lichtmoduls in schematischer Form.

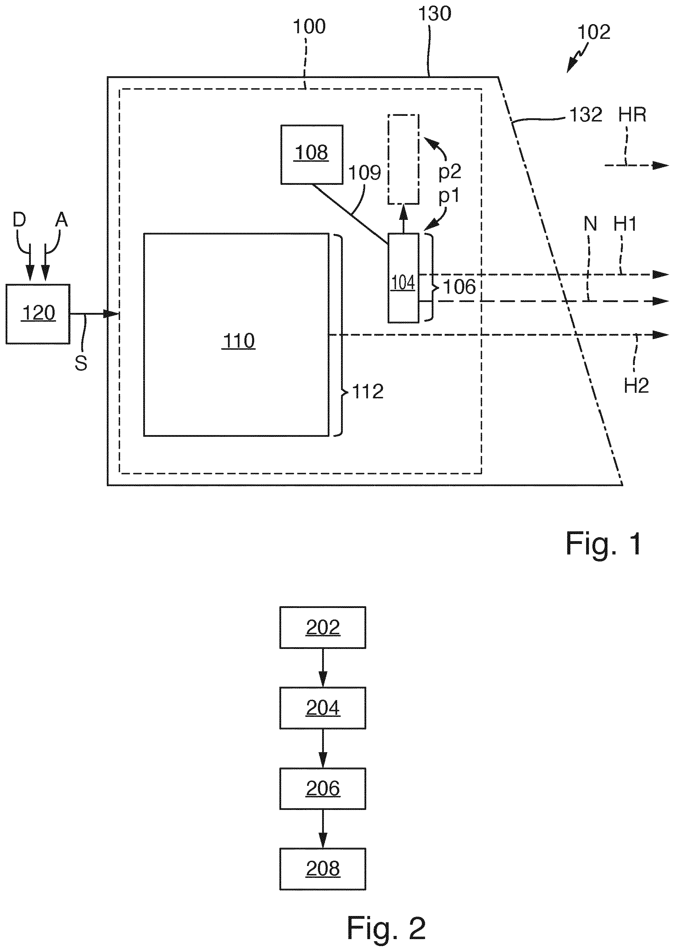

Zunächst wird auf die Figuren 1 und 2 Bezug genommen. Es ist Lichtmodul 100 für einen Kraftfahrzeugscheinwerfer 102 gezeigt.

Eine Nebenlichteinheit 104 ist dazu konfiguriert, eine Nebenlichtverteilung N von einer Abstrahlfläche 106 der Nebenlichteinheit 104 in einem Schritt 202 abzustrahlen, und eine erste Hauptlichtverteilung H1 von der Abstrahlfläche 106 der Nebenlichteinheit 104 in einem Schritt 204 abzustrahlen;

Eine Antriebseinheit 108 ist dazu konfiguriert, die Nebenlichteinheit 104 relativ zu einer Hauptlichteinheit 110 ausgehend von einer ersten Position p1, in welcher die Nebenlichteinheit 104 eine Abstrahlfläche 112 der Hauptlichteinheit 110 zumindest abschnittsweise überdeckt, in eine zweite Position p2, in welcher die Überdeckung der Abstrahlfläche 112 der Hauptlichteinheit 110 durch die Nebenlichteinheit 104 reduziert ist, zu bewegen. Die Antriebseinheit 108 umfasst beispielsweise einen Elektromotor, der ein Antriebsmoment in ein Getriebe 109 einbringt. Das Getriebe 109 ist zu einer Bewegung der Nebenlichteinheit 104 mit dieser momentübertragend verbunden.

Die Hauptlichteinheit 110 ist dazu konfiguriert, eine zweite Hauptlichtverteilung H2 von der Abstrahlfläche 112 der Hauptlichteinheit 110 in die Hauptabstrahlrichtung HR abzustrahlen.

Die Hauptlichtfunktion der Hauptlichteinheit 110 umfasst beispielsweise die Funktionen Fernlicht, Abblendlicht oder ein Matrixlicht bzw. die entsprechende Lichtverteilung. Die Nebenlichtfunktion der Nebenlichteinheit 104 umfasst beispielsweise ein Abbiegelicht, ein Tagfahrlicht und andere Lichtfunktionen bzw. die zugeordnete Lichtverteilung. Die Hauptlichteinheit 110 und die Nebenlichteinheit 104 sind in Fahrzeugrichtung bzw. Hauptabstrahlrichtung HR nacheinander angeordnet. Dabei sind die Hauptfunktionen Abblendlicht, Fernlicht und Matrix entgegen der Hauptabstrahlrichtung angeordnet, die Hilfsfunktionen bzw. Nebenfunktionen hingegen in Hauptabstrahlrichtung HR angeordnet. Wenn nun von Tagfahrlicht im Sinne der Nebenlichtfunktion auf Abblendlicht oder auf Fernlicht im Sinne der Hauptlichtfunktion umgeschaltet wird, so wird die Nebenlichteinheit 104 mechatronisch weggeklappt oder weggedreht. Alternativ kann dieses Wegbewegen aus der ersten Position p1 in die zweite Position p2 auch entlang einer gewählten Bahn erfolgen.

Ein Einschalten der Hauptlichteinheit 110 dauert zwischen wenigen Millisekunden bis typischerweise 40ms bei Xenon-Bifunktionsmodulen. Das Bewegen des Nebenlichtmoduls 104 erfordert etwa 500 ms bis 1000 ms, was für die Funktion Lichthupe zu lange wäre. Deshalb wird die Nebenlichteinheit 104 beim Einschalten und beim oder vor Beginn des Wegbewegens der Nebenlichteinheit 104 so betrieben, dass die erste Hauptlichtverteilung H1 abgestrahlt wird.

Das Lichtmodul 100 ist innerhalb eines Gehäuses 130 angeordnet, welches mit einer transparenten Abdeckscheibe 132 verschlossen ist.

Die Steuereinheit 120 empfängt das Aktivierungssignal A und das Deaktivierungssignal D. Die Steuereinheit 120 steuert über Steuersignale S das Lichtmodul gemäß den beschriebenen Verfahrensschritten.

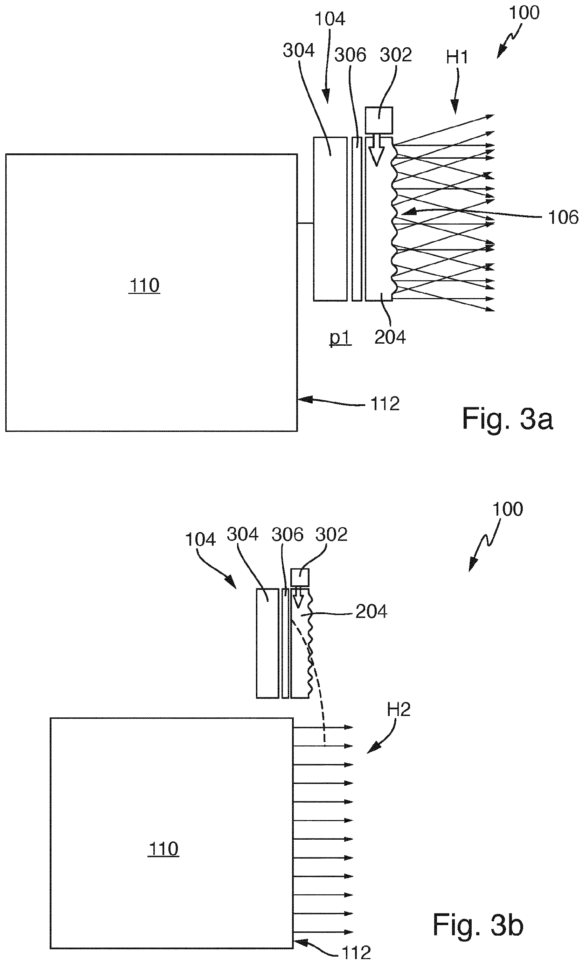

Gemäß den Figuren 3a und 3b umfasst das Lichtmodul 100 eine Zusatzlichtquelle 302 zum Abstrahlen einer ersten Lichtverteilung. Die Nebenlichteinheit 104 umfasst einen Lichtleiter 204, welcher eine Einkoppelfläche 402 zur Einkopplung der ersten Lichtverteilung und die Abstrahlfläche 106 umfasst.

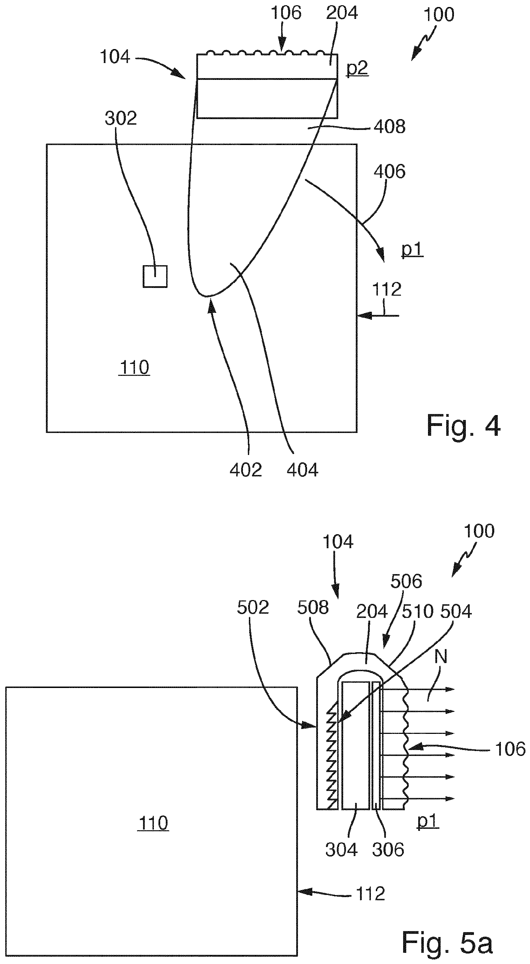

Gemäß der Figur 4 ist der Lichtleiter 204 um eine Achse 404 drehbar gelagert, um zwischen der ersten und der zweiten Position p1, p2 hin- und her bewegt zu werden. Gezeigt ist die Nebenlichteinheit 104 in der zweiten Position und kann gemäß dem Pfeil 406 in die erste Position p1 überführt werden. Der Lichtleiter 204 der Nebenlichteinheit 104 umfasst einen Lichtleitabschnitt 408, um das von der Einkoppelfläche 402 eingekoppelte Licht in Richtung der Abstrahlfläche 106 der Nebenlichteinheit 104 zu leiten.

Die als Lichthupen-LED bezeichenbare Zusatzlichtquelle 302 leuchtet beispielsweise für eine Zeitdauer von 1000ms bzw. eben für eine Zeitdauer, die benötigt wird, um die Nebenlichteinheit 104 wegzudrehen oder wegzuschieben. Danach übernimmt das Fernlicht der Hauptlichteinheit 110. Da die Einschaltdauer der Lichthupenfunktion vergleichsweise kurz ist, sind auch die thermischen Anforderungen einfach umzusetzen. Die LED der Lichthupenfunktion ist hinsichtlich ihrer Lichtfarbe und spektralen Zusammensetzung des abgestrahlten Lichts derart an die Lichtfarbe und spektrale Zusammensetzung des Lichts der Hauptlichteinheit 110 angepasst, dass der Fahrer und der Gegenverkehr keinen farblichen Unterschied feststellen kann.

Die Zusatzlichtquelle 302 ist in der Figur 4 feststehend zu der Hauptlichteinheit 110 angeordnet. Die Zusatzlichtquelle 302 und die Nebenlichteinheit 104 in der ersten Position p1 sind so zueinander angeordnet, dass die von der Zusatzlichtquelle 302 ausgesandte Lichtverteilung über die Einkoppelfläche 402 in den Lichtleiter 204 eingekoppelt wird.

In den Figuren 5a-c umfasst der Lichtleiter 204 der Nebenlichteinheit 104 eine Einkoppelfläche 502 und die Abstrahlfläche 106. Die Einkoppelfläche 502 koppelt in der ersten Position p1 der Nebenlichtquelle 104 wenigstens einen Teil der von der Abstrahlfläche 112 der Hauptlichteinheit 110 abgestrahlten zweiten Hauptlichtverteilung H2 in den Lichtleiter 204 ein. Diese Einkopplung und Weiterleitung im Lichtleiter 204 geschieht derart, so dass eine erste modifizierte Hauptlichtverteilung H1 von der Abstrahlfläche 106 des Lichtleiters 204 in Abhängigkeit von der zweiten Hauptlichtverteilung H2 abstrahlbar ist.

Der Einkoppelfläche 502 gegenüberliegend angeordnet umfasst das Lichtleiter 204 Reflektorstrukturen 504, welche das eingekoppelte Licht der zweiten Hauptlichtverteilung H2 in Richtung eines Umlenkabschnitts 506 leiten. Der Lichtleiter 204 umschließt eine Nebenfunktionsbaugruppe der Nebenlichteinheit 104 derart, dass das Fernlicht vom Lichtleiter 204 um die Nebenfunktionsbaugruppe herumgeleitet wird.

Der Umlenkabschnitt 506 umfasst beispielsweise verspiegelte Reflektorflächen 508, 510, welche das Licht von dem proximalen Abschnitt des Lichtleiters 204, in den das Licht eingekoppelt wird, zu dem distalen Abschnitt des Lichtleiters 204, in dem das Licht über die Abstrahlfläche 106 ausgekoppelt wird, leiten. Die zwei Umlenkspiegel-Beschichtungen gemäß den Umlenkabschnitten 508 und 510 ermöglichen eine leichtere Konstruktion und Herstellung sowie eine bessere Lichtleitung im Moment des Einschaltens und damit der Aufmerksamkeitswirkung. Bewegt sich die gesamte Nebenlichteinheit 104 nach oben, kommt weniger Fernlicht mit dem richtigen Einfallswinkel beim ersten Umlenkwinkel an. Von außen betrachtet ergibt sich ein Doppelimpuls: Zunächst im Moment des Einschaltens eine deutliche Beleuchtungsstärkeänderung, die nachlässt, sobald sich die Nebenlichteinheit 104 bewegt, und die wieder dauerhaft zunimmt, wenn das Fernlicht direkt von der Hauptlichteinheit 110 her strahlt.

In Figur 5a wird Licht von der Leuchtschicht 306 in den distalen Abschnitt des Lichtleiters 204 eingekoppelt und über die Abstrahlfläche 106 in Form der Nebenlichtverteilung N ausgekoppelt.

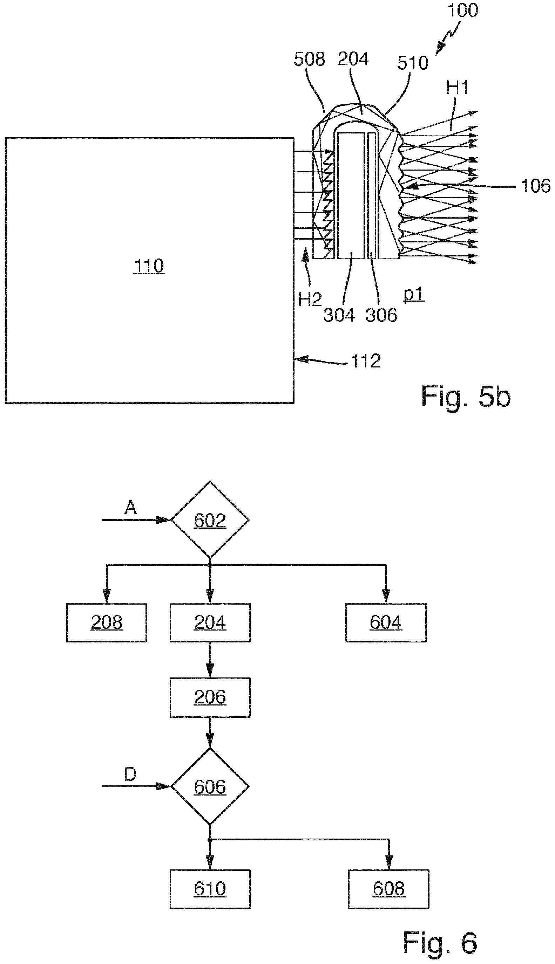

In Figur 5b ist die Nebenlichtfunktion deaktiviert und die Hauptlichtfunktion aktiviert. Die zweite Hauptlichtverteilung H2 wird in den proximalen Abschnitt des Lichtleiters 204 eingekoppelt und in den distalen Abschnitt des Lichtleiters 204 geleitet. Dort wird das Licht aus dem Lichtleiter 204 über die Abstrahlfläche 106 in Form der ersten modifizierten Hauptlichtverteilung H1 ausgekoppelt.

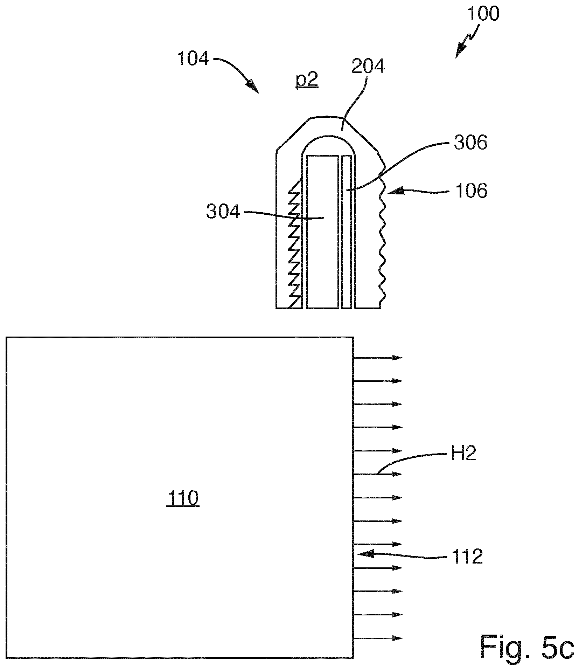

In der Figur 5c befindet sich die Nebenlichteinheit 104 an der zweiten Position p2. Es wird kein Licht mehr in den Lichtleiter 204 eingekoppelt, weshalb die erste modifizierte Hauptlichtfunktion deaktiviert ist. Die Abstrahlfläche 112 ist nun nicht mehr von der Nebenlichteinheit 104 bedeckt, womit die zweite Hauptlichtverteilung H2 die Hauptlichtfunktion bereitstellt.

In einem Beispiel stellen die erste und die zweite Hauptlichtverteilung H1, H2 eine Lichthupenfunktion oder eine Fernlichtfunktion bereit.

Figur 6 zeigt ein schematisches Ablaufdiagramm zum Betreiben des Lichtmoduls 100.

Ein Ermitteln oder Empfangen 602 eines Aktivierungssignals A dient zur Aktivierung der Lichthupe, was im Folgenden durchgeführt wird. Abstrahlen 204 der ersten Hauptlichtverteilung H1 erfolgt in Abhängigkeit von dem Aktivierungssignal A. Bewegen 206 der Nebenlichteinheit 104 aus der ersten Position p1 heraus erfolgt in Abhängigkeit von dem Aktivierungssignal A.

Die Abstrahlung der ersten Hauptlichtverteilung H1 und die Abstrahlung der zweiten Hauptlichtverteilung H2 werden beispielsweise gemeinsam aktiviert. Das bedeutet, dass die Schritte 208 und 204 nahezu parallel ausgeführt werden.

Wird die erste Hauptlichtverteilung H1 mittels der separaten Zusatzlichtquelle 302 erzeugt, so kann die separate Lichtquelle 302 zeitlich vor der Abstrahlung der zweiten Hauptlichtverteilung H2 durch die Hauptlichteinheit 110 aktiviert werden.

Ein Deaktivieren 604 der Abstrahlung 202 der Nebenlichtverteilung N wird in Abhängigkeit von dem Aktivierungssignal A durchgeführt, also dann, wenn das Aktivierungssignal A empfangen bzw. ermittelt wird. Wird ein Deaktivierungssignal D im Schritt 606 empfangen, so findet ein Aktivieren 608 der Nebenlichtfunktion, und wenigstens ein Deaktivieren 610 der zuvor aktivierten Hauptlichtfunktion statt.

Gemäß der Figuren 3a bis 5c umfasst die Nebenlichteinheit 104 einen Träger 304 und eine auf dem Träger 304 angeordnete Leuchtschicht 306, welche beispielsweise durch eine folienartige Leiterplatte mit darauf angeordneter Mehrzahl von Halbleiterleuchtmitteln umfasst. Selbstverständlich können neben den dargestellten Lichtleitern auch Stablichtleiter oder Plattenlichtleiter zum Einsatz kommen.

Bei Stablichtleitern erfolgt die Einkopplung des Lichts an einem Ende des Stabs oder über eine geeignete Mitteneinkopplung und die Auskopplung erfolgt über das andere Stabende oder mithilfe von Auskoppelelementen über einen Teil der Mantelfläche des Lichtleiters.

Bei der Verwendung von Plattenlichtleitern erfolgt die Einkopplung bevorzugt über eine Stirnseite des Plattenlichtleiters oder mittels bekannter Einkoppeloptiken und die Auskopplung über eine weitere Stirnseite.

Wie die dargestellten Lichtleiter können die weiteren genannten Ausführungsformen auch Umlenkflächen besitzen, wobei die Umlenkflächen auch mit Prismen versehen sein können.

## Patentansprüche

1. Ein Lichtmodul (100) für einen Kraftfahrzeugscheinwerfer (102), wobei das Lichtmodul (100) eine Nebenlichteinheit (104), eine Antriebseinheit (108) und eine Hauptlichteinheit (110) umfasst,
wobei die Nebenlichteinheit (104) dazu konfiguriert ist, in einer ersten Position (p1) eine Nebenlichtverteilung (N) von einer Abstrahlfläche (106) der Nebenlichteinheit (104) abzustrahlen, und eine erste Hauptlichtverteilung (H1) von der Abstrahlfläche (106) der Nebenlichteinheit (104) abzustrahlen;
wobei die Antriebseinheit (108) dazu konfiguriert ist, die Nebenlichteinheit (104) relativ zu einer Hauptlichteinheit (110) ausgehend von der ersten Position (p1), in welcher die Nebenlichteinheit (104) eine Abstrahlfläche (112) der Hauptlichteinheit (110) zumindest abschnittsweise überdeckt, in eine zweite Position (p2), in welcher die Überdeckung der Abstrahlfläche (112) der Hauptlichteinheit (110) durch die Nebenlichteinheit (104) reduziert ist, zu bewegen; wobei die Hauptlichteinheit (110) dazu konfiguriert ist, eine zweite Hauptlichtverteilung (H2) von der Abstrahlfläche (112) der Hauptlichteinheit (110) abzustrahlen;
und
**dadurch gekennzeichnet, dass**
das Lichtmodul dazu konfiguriert ist, eine Lichthupenfunktion dadurch bereitzustellen, dass die durch die Nebenlichteinheit (104) abstrahlbare erste Hauptlichtverteilung (H1) bei der Bewegung der Nebenlichteinheit (104) von der ersten Position (p1) in die zweite Position (p2) durch die von der Hauptlichteinheit (110) abstrahlbare zweite Hauptlichtverteilung (H2) sukzessiv ersetzt wird.

2. Das Lichtmodul (100) gemäß dem Anspruch 1, wobei das Lichtmodul (100) eine Zusatzlichtquelle (302) zum Abstrahlen einer ersten Lichtverteilung umfasst, und wobei die Nebenlichteinheit (104) einen Lichtleiter (204), welcher eine Einkoppelfläche (402) zur Einkopplung der ersten Lichtverteilung und die Abstrahlfläche (106) umfasst, umfasst.

3. Das Lichtmodul (100) gemäß dem Anspruch 2, wobei die Zusatzlichtquelle (302) feststehend zu der Hauptlichteinheit (110) angeordnet ist, und wobei die Zusatzlichtquelle (302) und die Nebenlichteinheit (104) in der ersten Position (p1) so zueinander angeordnet sind, dass die erste Lichtverteilung über die Einkoppelfläche (402) in den Lichtleiter (204) eingekoppelt wird.

4. Das Lichtmodul (100) gemäß Anspruch 1 wobei die Nebenlichteinheit (104) einen Lichtleiter (204) umfasst, wobei der Lichtleiter (204) der Nebenlichteinheit (104) eine Einkoppelfläche (502) und die Abstrahlfläche (106) umfasst, wobei die Einkoppelfläche (502) in der ersten Position (p1) der Nebenlichtquelle (104) wenigstens einen Teil der von der Abstrahlfläche (112) der Hauptlichteinheit (110) abgestrahlten zweiten Hauptlichtverteilung (H2) in den Lichtleiter (204) einkoppelt, so dass die erste Hauptlichtverteilung (H1) von der Abstrahlfläche (106) des Lichtleiters (204) in Abhängigkeit von der zweiten Hauptlichtverteilung (H2) abstrahlbar ist.

5. Ein Lichtmodul (100) für einen Kraftfahrzeugscheinwerfer (102), wobei das Lichtmodul (100) eine Nebenlichteinheit (104), eine Antriebseinheit (108) und eine Hauptlichteinheit (110) umfasst,
wobei die Nebenlichteinheit (104) dazu konfiguriert ist, in einer ersten Position (p1) eine Nebenlichtverteilung (N) von einer Abstrahlfläche (106) der Nebenlichteinheit (104) abzustrahlen;
wobei die Antriebseinheit (108) dazu konfiguriert ist, die Nebenlichteinheit (104) relativ zu einer Hauptlichteinheit (110) ausgehend von der ersten Position (p1), in welcher die Nebenlichteinheit (104) eine Abstrahlfläche (112) der Hauptlichteinheit (110) zumindest abschnittsweise überdeckt, in eine zweite Position (p2), in welcher die Überdeckung der Abstrahlfläche (112) der Hauptlichteinheit (110) durch die Nebenlichteinheit (104) reduziert ist, zu bewegen; und
wobei das Lichtmodul (100) dazu konfiguriert ist, wenn die Nebenlichteinheit (104) in der zweiten Position (p2) ist, eine zweite Hauptlichtverteilung abzustrahlen, wobei die zweite Hauptlichtverteilung (H2) von der Abstrahlfläche (112) der Hauptlichteinheit (110) abgestrahlt wird, **dadurch gekennzeichnet ist, dass** das Lichtmodul (100) dazu konfiguriert ist, wenn die Nebenlichteinheit (104) in der ersten Position (p1) ist und die Abstrahlfläche (112) der Hauptlichteinheit (110) zumindest abschnittsweise überdeckt, eine modifizierte erste Hauptlichtverteilung (H1) abzustrahlen, wobei ein Teil der Hauptlichtverteilung (H2) aus der Hauptlichteinheit (110) durch die Nebenlichteinheit (104) umgelenkt wird und von der Abstrahlfläche (106) der Nebenlichteinheit (104) als die modifizierte erste Hauptlichtverteilung (H1) abgestrahlt wird.

## Claims

1. Light module (100) for a motor vehicle headlight (102), the light module (100) comprising a secondary light unit (104), a drive unit (108) and a main light unit (110),
the secondary light unit (104) being configured to emit, in a first position (p1), a secondary light distribution (N) from an emission surface (106) of the secondary light unit (104), and to emit a first main light distribution (H1) from the emission surface (106) of the secondary light unit (104);
the drive unit (108) being configured to move the secondary light unit (104) relative to a main light unit (110) starting from the first position (p1) in which the secondary light unit (104) covers an emission surface (112) of the main light unit (110) at least in portions, into a second position (p2) in which the coverage of the emission surface (112) of the main light unit (110) by the secondary light unit (104) is reduced;
the main light unit (110) being configured to emit a second main light distribution (H2) from the emission surface (112) of the main light unit (110); and **characterized in that** the light module is configured to provide a headlight flasher function **in that** the first main light distribution (H1) that can be emitted by the secondary light unit (104) is successively replaced by the second main light distribution (H2) that can be emitted by the main light unit (110) during the movement of the secondary light unit (104) from the first position (p1) into the second position (p2).

2. Light module (100) according to claim 1, wherein the light module (100) comprises an additional light source (302) for emitting a first light distribution, and wherein the secondary light unit (104) comprises a light guide (204) which comprises a coupling surface (402) for coupling the first light distribution and the emission surface (106).

3. Light module (100) according to claim 2, wherein the additional light source (302) is arranged fixedly with respect to the main light unit (110), and wherein the additional light source (302) and the secondary light unit (104) are arranged relative to one another in the first position (p1) such that the first light distribution is coupled into the light guide (204) via the coupling surface (402).

4. Light module (100) according to claim 1, wherein the secondary light unit (104) comprises a light guide (204), wherein the light guide (204) of the secondary light unit (104) comprises a coupling surface (502) and the emission surface (106), wherein in the first position (p1) of the secondary light source (104), the coupling surface (502) couples at least some of the second main light distribution (H2) emitted from the emission surface (112) of the main light unit (110) into the light guide (204), so that the first main light distribution (H1) can be emitted from the emission surface (106) of the light guide (204) on the basis of the second main light distribution (H2).

5. Light module (100) for a motor vehicle headlight (102), the light module (100) comprising a secondary light unit (104), a drive unit (108) and a main light unit (110),
the secondary light unit (104) being configured to emit, in a first position (p1), a secondary light distribution (N) from an emission surface (106) of the secondary light unit (104);
the drive unit (108) being configured to move the secondary light unit (104) relative to a main light unit (110) starting from the first position (p1) in which the secondary light unit (104) covers an emission surface (112) of the main light unit (110) at least in portions, into a second position (p2) in which the coverage of the emission surface (112) of the main light unit (110) by the secondary light unit (104) is reduced; and
the light module (100) being configured, when the secondary light unit (104) is in the second position (p2), to emit a second main light distribution, the second main light distribution (H2) being emitted from the emission surface (112) of the main light unit (110),
**characterized in that** the light module (100) is configured, when the secondary light unit (104) is in the first position (p1) and covers the emission surface (112) of the main light unit (110) at least in portions, to emit a modified first main light distribution (H1), some of the main light distribution (H2) being deflected out of the main light unit (110) through the secondary light unit (104) and being emitted from the emission surface (106) of the secondary light unit (104) as the modified first main light distribution (H1).

## Revendications

1. Module de lumière (100) pour un phare de véhicule automobile (102), dans lequel le module de lumière (100) comprend une unité de lumière secondaire (104), une unité d'entraînement (108) et une unité de lumière principale (110),
dans lequel l'unité de lumière secondaire (104) est configurée pour émettre, dans une première position (p1), une répartition de lumière secondaire (N) à partir d'une surface d'émission (106) de l'unité de lumière secondaire (104) et pour émettre une première répartition de lumière principale (H1) à partir de la surface d'émission (106) de l'unité de lumière secondaire (104);
dans lequel l'unité d'entraînement (108) est configurée pour déplacer l'unité de lumière secondaire (104) par rapport à une unité de lumière principale (110), à partir de la première position (p1) dans laquelle l'unité de lumière secondaire (104) recouvre, au moins par sections, une surface d'émission (112) de l'unité de lumière principale (110), dans une deuxième position (p2) dans laquelle la couverture de la surface d'émission (112) de l'unité de lumière principale (110) par l'unité de lumière secondaire (104) est réduite;
dans lequel l'unité de lumière principale (110) est configurée pour émettre une deuxième répartition de lumière principale (H2) à partir de la surface d'émission (112) de l'unité de lumière principale (110); et
**caractérisé par le fait que** le module de lumière est configuré pour fournir une fonction d'appel de phare par **le fait que** la première répartition de lumière principale (H1) apte à être émise par l'unité de lumière secondaire (104) est remplacée successivement par la deuxième répartition de lumière principale (H2) apte à être émise par l'unité de lumière principale (110), lorsque l'unité de lumière secondaire (104) est déplacée à partir de la première position (p1) dans la deuxième position (p2).

2. Module de lumière (100) selon la revendication 1, dans lequel le module de lumière (100) comprend une source de lumière supplémentaire (302) pour émettre une première répartition de lumière, et dans lequel l'unité de lumière secondaire (104) présente un guide de lumière (204) qui comprend une surface de couplage (402) pour coupler la première répartition de lumière ainsi que la surface d'émission (106).

3. Module de lumière (100) selon la revendication 2, dans lequel la source de lumière supplémentaire (302) est disposée de manière fixe par rapport à l'unité de lumière principale (110), et dans lequel la source de lumière supplémentaire (302) et l'unité de lumière secondaire (104) sont disposées, dans la première position (p1), l'une par rapport à l'autre de telle sorte que la première répartition de lumière est couplée dans le guide de lumière (204) via la surface de couplage (402).

4. Module de lumière (100) selon la revendication 1, dans lequel l'unité de lumière secondaire (104) comprend un guide de lumière (204), dans lequel le guide de lumière (204) de l'unité de lumière secondaire (104) comprend une surface de couplage (502) et le surface d'émission (106), dans lequel, dans la première position (p1) de la source de lumière secondaire (104), la surface de couplage (502) couple au moins une partie de la deuxième répartition de lumière principale (H2) émise par la surface d'émission (112) de l'unité de lumière principale (110), dans le guide de lumière (204), de sorte que la première répartition de lumière principale (H1) peut être émise à partir de la surface d'émission (106) du guide de lumière (204) en fonction de la deuxième répartition de lumière principale (H2).

5. Module de lumière (100) pour un phare de véhicule automobile (102), dans lequel le module de lumière (100) comprend une unité de lumière secondaire (104), une unité d'entraînement (108) et une unité de lumière principale (110),
dans lequel l'unité de lumière secondaire (104) est configurée pour émettre, dans une première position (p1), une répartition de lumière secondaire (N) à partir d'une surface d'émission (106) de l'unité de lumière secondaire (104);
dans lequel l'unité d'entraînement (108) est configurée pour déplacer l'unité de lumière secondaire (104) par rapport à une unité de lumière principale (110), à partir de la première position (p1) dans laquelle l'unité de lumière secondaire (104) recouvre, au moins par sections, une surface d'émission (112) de l'unité de lumière principale (110), dans une deuxième position (p2) dans laquelle la couverture de la surface d'émission (112) de l'unité de lumière principale (110) par l'unité de lumière secondaire (104) est réduite; et
dans lequel le module de lumière (100) est configuré pour, lorsque l'unité de lumière secondaire (104) est dans la deuxième position (p2), émettre une deuxième répartition de lumière principale (H2), dans lequel la deuxième répartition de lumière principale (H2) est émise à partir de la surface d'émission (112) de l'unité de lumière principale (110),
**caractérisé par le fait que** le module de lumière (100) est configuré pour, lorsque l'unité de lumière secondaire (104) est dans la première position (p1) et recouvre au moins par sections la surface d'émission (112) de l'unité de lumière principale (110), émettre une première répartition de lumière principale modifiée (H1), dans lequel une partie de la répartition de lumière principale (H2) de l'unité de lumière principale (110) est déviée par l'unité de lumière secondaire (104) et est émise à partir de la surface d'émission (106) de l'unité de lumière secondaire (104) en tant que première répartition de lumière principale modifiée (H1).
